Europäisches Patentamt

European Patent Office

Office européen des brevets

(11) Veröffentlichungsnummer: **0 028 424**
**B1**

## (12) EUROPÄISCHE PATENTSCHRIFT

(45) Veröffentlichungstag der Patentschrift: 09.10.85

(21) Anmeldenummer: 80200792.2

(22) Anmeldetag: 22.08.80

(51) Int. Cl.⁴: **F 01 D 25/16, F 01 D 25/28, F 16 C 35/02**

(54) Kombiniertes Kamm- und Traglager für Turbogeneratoren.

(30) Priorität: 31.10.79 CH 9752/79

(43) Veröffentlichungstag der Anmeldung:
13.05.81 Patentblatt 81/19

(45) Bekanntmachung des Hinweises auf die
Patenterteilung:
09.10.85 Patentblatt 85/41

(84) Benannte Vertragsstaaten:
CH DE FR LI NL SE

(56) Entgegenhaltungen:
EP-A-0 026 947
CH-A- 533 795
DE-A-2 245 913
DE-A-2 655 322
FR-A-1 332 074
FR-A-2 288 216
US-A-1 678 968

"Die Dampfturbinen", C. Zietemann, Springer-
Verlag, 1955, Fig. 305,447,448

"Steam turbines", E.F. Church, Mc-Graw-Hill,
1950, Fig. 12-12

(73) Patentinhaber: BBC Aktiengesellschaft Brown,
Boveri & Cie.
Haselstrasse
CH-5401 Baden (CH)

(72) Erfinder: Dömer, Wolfgang
Guggimoos 395
CH-5425 Schneisingen (CH)
Erfinder: Klepper, Helmut
Im Böhlchen 37
D-6141 Einhausen (DE)

Courier Press, Leamington Spa, England.

**Beschreibung**

Die Erfindung betrifft ein kombiniertes Kamm- und Traglager für Turbogeneratoren nach dem Oberbegriff des Patentanspruchs 1.

Bei Turbogeneratoren ist die gemeinsame Welle der meist baulich getrennten Turbinenstufen und des Generators aud einem räumlich fixierten Turbinenfestlagerbock, einem festen oder verschiebbaren Kammlagerbock und mehreren Zwischen- und Endlagerböcken gelagert. Auf diese Weise können sich die Komponenten der Anlage unter der Wirkung der Wärmedehnungen, die beim Anfahren und Abstellen der Anlage sowie bei Laständerungen auftreten, in Längsrichtung unbehindert ausdehnen.

Bei einigen bekannten Ausführungen von axialverschieblichen Kammlagerböcken sind das die Längskräfte der Welle aufnehmende Kammlager und das die Querkräfte, in der Hauptsache also die Gewichtsbelastung, aufnehmende Traglager kombiniert in einem gemeinsamen Lagerbock angeordnet, der auf seiner Sohle gleitbar die Verschiebungen der Turbinengehäuse zwangsläufig mitmacht. Zu diesem Zweck sind zwischen den Lagerböcken und den Gehäusestirnseiten der Turbinenstufen formschlüssige Elemente vorgesehen, die die Ausdehnungsbewegung starr übertragen. Ferner sind die verschiebbaren Lagerböcke durch formschlüssige Niederhalterelemente gegen ein Kippen der Lager um die Wellenachse infolge der bei Lastzunahmen auftretenden Zusatzdrehmomente und Rohrleitungsreaktionen gesichert.

Zu dieser Bauart gehört das im Buch "Steam Turbines" von E. Church, 3rd. ed., McGraw-Hill 1950, in den Fig. 12—12 auf S. 342 gezeigte Lagergehäuse, das sich auf einen Lagerbock abstützt und auf dem das heisse, dampfeinlasseitige Ende des Turbinengehäuses auf seitlich am Lagergehäuse vorgesehenen Konsolen aufliegt, und durch Niederhalterelemente mit diesem in Längsrichtung starr verbunden und gegen Kippen um die Wellenachse gesichert ist. Zur gleichen Bauart gehört auch eine Lagerausführung für BBC-Turbinen, die im Buch von C. Zietemann "Die Dampfturbinen", 2. Aufl., Springer 1959, auf den S. 374 und 375 in den Fig. 447 und 448 dargestellt ist.

Bei einer weiteren bekannten Bauart von Turbogeneratoren sind alle Lagerböcke fest mit dem Fundament verschraubt und ihre Kammlager jeweils in einem innerhalb des Lagerbocks verschiebbaren Lagergehäuse untergebracht. Das Traglager ist dabei im Lagerbock unverschieblich angeordnet, so dass sich der Wellenlaufzapfen im Betrieb gegenüber den Lagerlaufflächen verschiebt.

Die vorerwähnte Bauart weist den Nachteil verhältnismässig grosser Baulänge auf. Dies bedeutet gegenüber kürzeren Lagern, abgesehen vom grösseren Material- und Bauaufwand, bei gegebenem Wellendurchmesser eine grössere Wellenschlankheit und damit tiefer liegende kritische Drehzahlen und stärkere Vibrationsbeanspruchungen. Bei der erstgenannten Ausführung besteht der Nachteil, dass ihre Verbindung mit dem Fundament wegen der nicht spielfreien verschieblichen Lagerung nicht starr sein kann, d.h., sie arbeitet im Betrieb und kann kippen, klemmen und verschleissen, was wiederum Deformationen von Welle, Lagerung und Gehäusen zur Folge haben kann.

Bei dieser Ausführung mit feststehenden Lagerböcken und verschieblichen Kammlagern ist zwar eine einwandfreie, starre Verankerung des Lagerbocks am Fundament verwirklicht, doch kommt hier zum Nachteil der grösseren Baulänge die relativ niedrige kritische Drehzahl hinzu.

Aus der EP—A—026 947 ist ferner eine Lagergehäuseabstützung für Turbomaschinen bekannt, bei der das Lagergehäuse ohne Grundplatte direkt starr am Fundament verankert wird. Die Abstützung weist Schraubelemente auf, die eine räumliche Ausrichtung des Lagergehäuses zwecks Anpassung an die Lage der Turbinenwelle ermöglichen, und zwar in der Höhe, seitlich zur und längs der Wellenachse sowie ein Kippen um die Wellenachse. Diese Lagerabstützung ist aber nur für Festlager brauchbar und fällt daher aus dem Rahmen der vorliegenden Erfindung.

Die vorliegende, im Patentanspruch 1 definierte Erfindung entstand aus der Aufgabenstellung, eine Lagerkonzeption für Turbogeneratoren zu schaffen, die die vorerwähnten Nachteile der bekannten Lagerbauarten vermeidet, wobei besonders eine kurze, gedrungene Bauweise und exakte Führung der verschieblichen Lagerkomponenten anzustreben und eine starre Verbindung des Lagerbocks mit dem Fundament gefordert war.

Die Erfindung wird im folgenden anhand eines in der Zeichnung dargestellten Ausführungsbeispiels näher beschrieben. In der Zeichnung stellen dar:

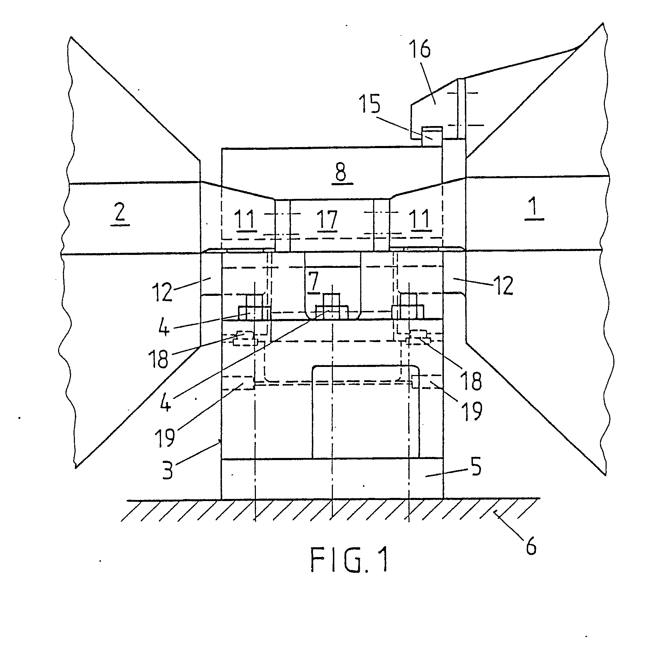

Fig. 1 einen Aufriss eines Zwischenlagers der erfindungsgemässen Bauart, die

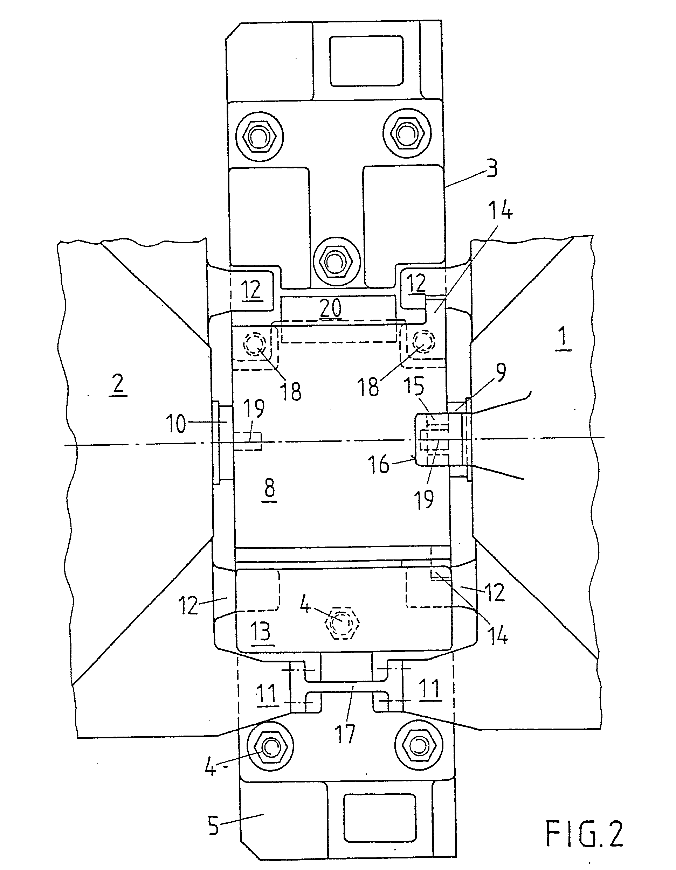

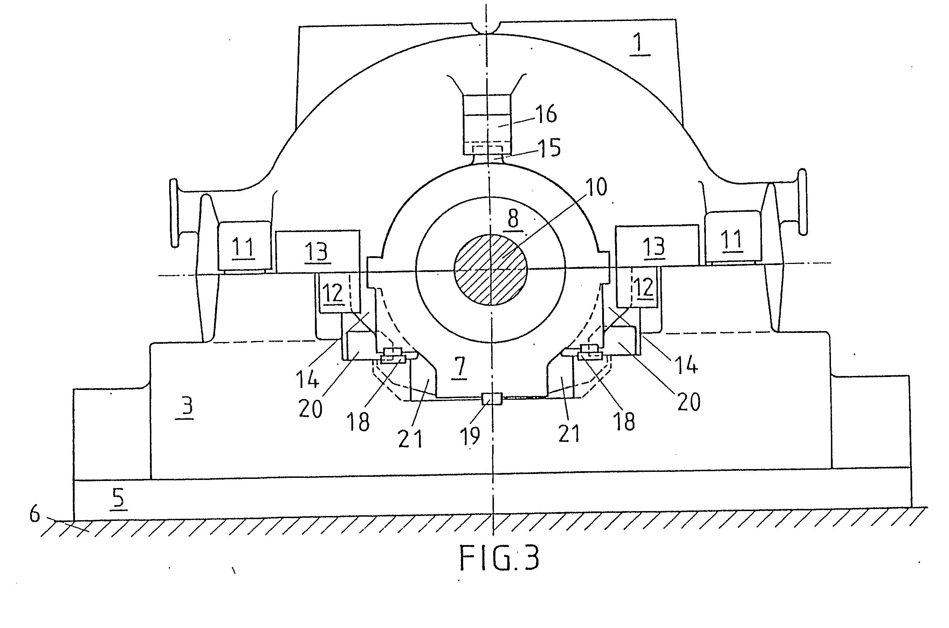

Fig. 2 und 3 den zugehörgen Grundriss bzw. Seitenriss,

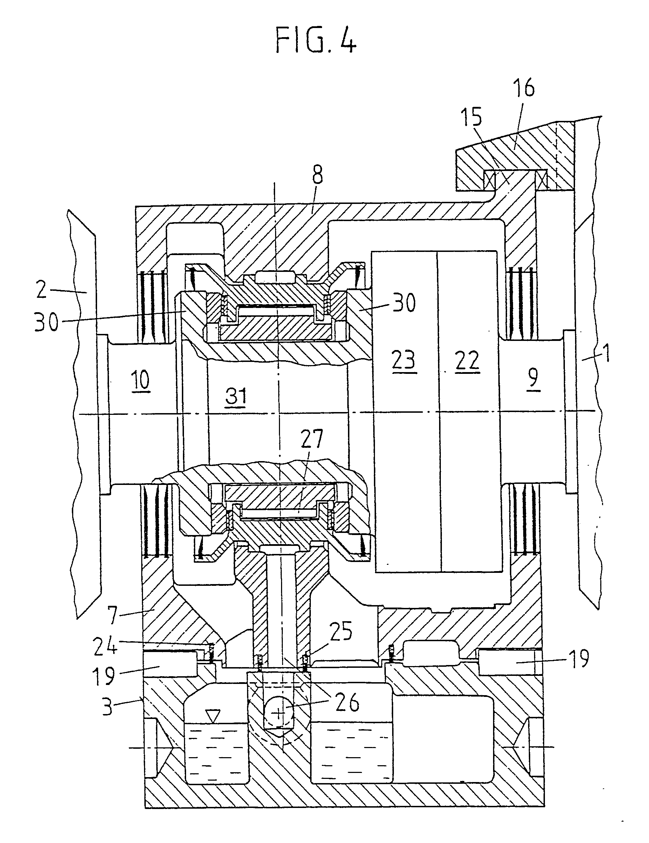

Fig. 4 einen Axialschnitt durch das Lagergehäuse und den Lagerbock,

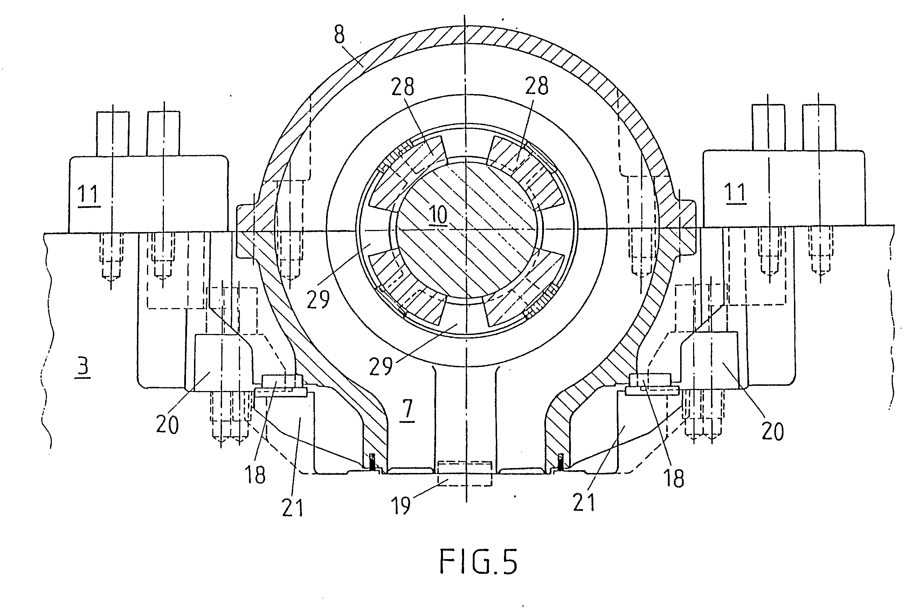

Fig. 5 im Massstab der Fig. 4 einen Querschnitt durch das Lagergehäuse mit einem Teil des Lagerbocks und Befestigungselementen, und

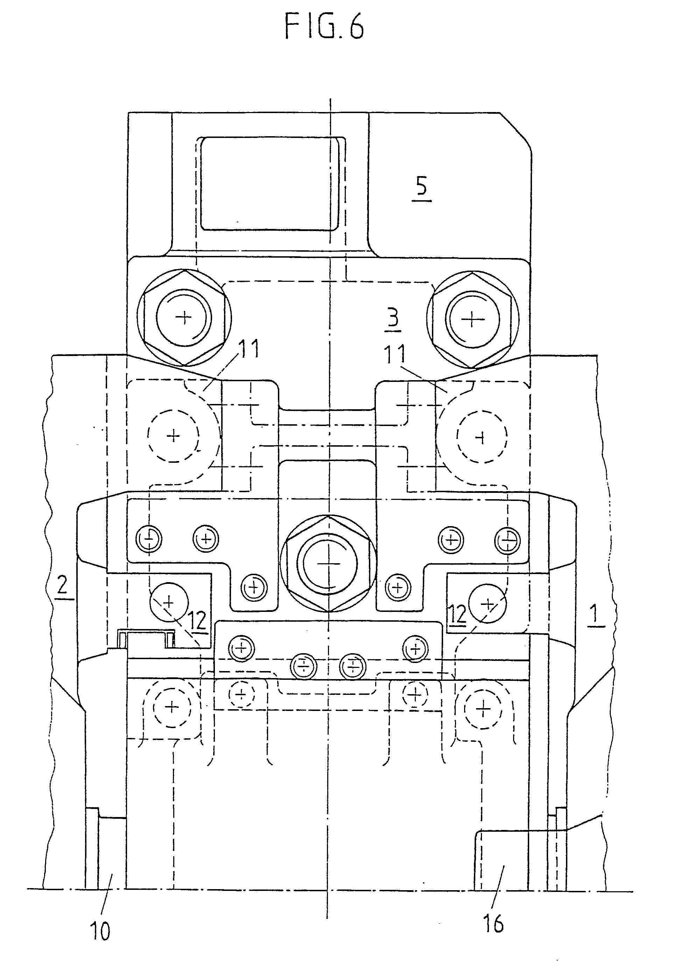

Fig. 6 eine Hälfte des Lagers im Grundriss.

Die Fig. 1 bis 3 und 4 bis 6 sind jeweils im gleichen Massstab dargestellt.

In Fig. 1, 2 und 3 bedeuten 1 das Gehäuse einer Hochdruckturbinenstufe, 2 das Gehäuse einer Mitteldruckturbinenstufe und 3 den Lagerbock, der die Lagerelemente und die Kupplung der zwischen den beiden Gehäusen befindlichen Wellenabschnitte enthält. Der Lagerbock 3 ist mit Ankerschrauben 4 an einer Grundplatte 5 befestigt, die ihrerseits am Fundament 6 verankert ist. Wie insbesondere aus dem in Fig. 3 dargestellten Seitenriss hervorgeht, nimmt der Lagerbock 3 einen Lagergehäuseunterteil 7 auf, der zusammen mit dem Lagergehäuseoberteil 8 die beiden Wellenstummel 9 und 10 der beiden Turbostufen und ihre Lagerelemente aufnimmt, die unten anhand der Fig. 4 und 5 näher beschrieben werden.

Die Gehäuse 1 und 2 der beiden Turbinenstufen stützen sich mit Auflagertatzen 11, die an der Stirnseite der Turbinengehäuseoberteile vorgesehen sind, auf erhöhten Sockeln des Lagerbocks 3 ab. Um das auf das Turbinengehäuse wirkende Reaktionsmoment der Turbine aufzunehmen, weist die Stirnseite der Turbinengehäuseunterteile ebenfalls Auflagertatzen auf, die mit 12 bezeichnet sind und durch Turbinengehäuseniederhalter 13 gegen Kippen um die Wellenachse und nach oben gerichtete Vertikalkräfte gesichert sind. In der Fig. 2 sind in der rechten Bildhälfte die oberen Auflagertatzen 11 und der Turbinengehäuseniederhalter 13 weggelassen, so dass die unteren Auflagertatzen 12 zur Gänze sichtbar sind.

Die zur Hochdruckturbinenstufe 1 gehörigen unteren Auflagertatzen 12 weisen, wie aus den Fig. 1 und 2 hervorgeht, breite Nuten auf, in die Mitnehmernasen 14 des Lagergehäuseunterteils 7 eingreifen. In gleicher Weise grieft eine Nase 15 am Lagergehäuseoberteil 8 in eine Nut einer am Turbinengehäuseoberteil 1 angeschraubten Mitnehmertatze 16 ein. Auf diese Weise nimmt das Turbinengehäuse der Hochdruckturbinenstufe 1 bei einer Verschiebung infolge Wärmeausdehnung das Lagergehäuse 7 + 8 mit. Um die relative Lage der beiden Turbinenstufen 1 und 2 zu wahren, sind die Stirnseiten ihrer Auflagertatzen 11 durch Distanzbrücken 17 berbunden, so dass sich eine Verschiebung der Turbinenstufe 1 starr auf die Turbinenstufe 2 überträgt. Auf diese Weise bleibt die Lage der beiden Turbinenstufen relativ zum Lagergehäuse 7 + 8 und den darin befindlichen Lagerelementen bei allen Temperaturen gewahrt.

Um eine solche Verschiebung des Lagergehäuses 7 + 8 zu ermöglichen, sitzt das Lagergehäuseunterteil 7 auf Gleitelementen 18, die aus je zwei gegeneinander verschieblichen Scheiben bestehen, von denen die untere in einer Ausnehmung des Lagerbocks 3 und die obere in einer Ausnehmung des Lagergehäuseunterteils 7 sitzt.

Zur axialen Führung des Lagergehäuses dienen zwei Führungskeile 19, die in Nuten des Lagerbocks 3 fixiert sind und in Nuten in der Basis des Lagergehäuseunterteils 7 eingreifen.

Zwischen den zwei Gleitelementen einer Seite befinden sich Lagergehäuseniederhalter 20, die am Lagerbock 3 angeschraubt sind und ein Kippen des Lagergehäuses um die Wellenachse verhindern, aber die Längsverschieblichkeit des Lagergehäuses 7 + 8 gegenüber dem Lagerbock nicht beeinträchtigen. Das Kippen wird verhindert, indem sich seitliche Konsolen 21 gegen die freie Unterseite der Niederhalter 20 anlegen.

Fig. 4, die einen Längsschnitt durch das Lager darstellt, zeigt die Kupplungsflanschen 22 und 23 der beiden Wellenstummel 9 und 10 und die Elemente der Wellenlagerung.

In der Basis des Lagergehäuseunterteils 7 sind federbelastete Dichtungsringe 24 und 25 vorgesehen, die den Spalt zwischen Lagergehäuse und Lagerbock abdichten. Der Hohlraum in letzerem dient als Oelsumpf für das aus den Lagerstellen abfliessende Schmieröl, das über den Schmierölzuführkanal 26 und den Ringkanal 27 auf bekannte Weise den Lagerstellen zugeführt wird. Letztere bestehen aus Traglagersegmenten 28 und Kammlagersegmenten 29, die mit den Lagerkämmen 30 zusammenwirken. Durch die Anordnung des Traglagers zwischen den beiden Kammlagern ergibt sich in axialer Richtung eine bedeutende Platzersparnis gegenüber den bekannten Bauarten und der Vorteil, dass die Traglagersegmente 28 ihre Lage gegenüber dem Traglagerzapfen 31 in jeder Stellung des Lagergehäuses beibehalten, so dass das Traglager immer unter besten Bedingungen mit den aufeinander eingelaufenen Laufflächen des Traglagerzapfens 31 und der Traglagersegmente 28 arbeitet. Die Gleitelemente 18 gestatten eine leichte Verschieblichkeit des Lagergehäuses 7 + 8 gegenüber dem Lagerbock 3 bei Wärmedehnungen, so dass Verspannungen vermieden werden, und die federbelasteten Dichtungsringe 24 und 25 ermöglichen die Verwendung des feststehenden Lagerbocks als Oelsumpf und die Anordnung der Schmierölleitungen und -kanäle an bzw. in demselben.

Da ein solches Lager bei gleicher Belastbarkeit kürzer gebaut werden kann als herkömmliche Lager für Turbogeneratoren, kann die Welle kürzer und damit bei gleicher kritischer Drehzahl mit kleinerem Durchmesser und damit billiger ausgeführt werden. Damit werden auch die radialen Abmessungen des Lagers kompakter. Neben diesen wirtschaftlichen Vorteilen besitzt diese Konzeption auch technische und betriebliche Vorteile: Einwandfreie Laufeigenschaften des Traglagers und infolge verminderten Verschleisses geringeren Wartungsaufwand.

Bezeichnungsliste
1 Gehäuse der Hochdruckturbinenstufe
2 Gehäuse der Mitteldruckturbinenstufe
3 Lagerbock
4 Ankerschrauben
5 Grundplatte
6 Fundament
7 Lagergehäuseunterteil
8 Lagergehäuseoberteil
9 Wellenstummel
10 Wellenstummel
11 Auflagertatzen der Turbinengehäuseoberteile
12 Auflagertatzen der Turbinengehäuse-unterteile
13 Turbinengehäuseniederhalter
14 Mitnehmernasen am Lagergehäuseunterteil
15 Mitnehmernase am Lagergehäuseoberteil
16 Mitnehmertatze
17 Distanzbrücken
18 Gleitelemente
19 Führungskeile
20 Lagergehäuseniederhalter
21 Konsolen
22 Kupplungsflansch

23 Kupplungsflansch
24 Dichtungsring
25 Dichtungsring
26 Schmierölzufuhrkanal
27 Ringkanal
28 Traglagersegmente
29 Kammlagersegmente
30 Lagerkämme
31 Traglagerzapfen

**Patentansprüche**

1. Kombiniertes Kamm- und Traglager für Turbogeneratoren, mit einem am Fundament starr befestigten Lagerbock und verschiebbaren Kamm- und Traglagerelementen, wobei die Kamm- und Traglagerelemente in einem im Lagerbock (3) in Wellenlängsrichtung verschiebbaren Lagergehäuse (7 + 8) untergebracht sind, und die traglagerelemente (28) zwischen zwei Kammlagern mit Kammlagerelementen (29) angeordnet ist, ferner mit Führungselementen zur axialen Führung des Lagergehäuses und Gleitelementen zur Abstützung des Lagergehäuses (7 + 8) im Lagerbock (3), die eine axiale Verschiebung des Lagergehäuses (7 + 8) gegenüber dem feststehenden Lagerbock (3) erlauben, dadurch gekennzeichnet, dass die Gleitelemente (18) aus je einem Paar aufeinanderliegender, gegeneinander verschieblicher Scheiben bestehen, von denen die untere in einer Ausnehmung des Lagerbocks (3) und die obere in einer Ausnehmung des Lagergehäuseunterteils (7) sitzt, und dass es Niederhalterelemente (20) zur Sicherung des Lagergehäuses (7 + 8) gegen Kippbewegungen um die Welenachse aufweist.

2. Kombiniertes Kamm- und Traglager nach Anspruch 1, dadurch gekennzeichnet, dass die kippungsverhindernden Flächen der Niederhalterelemente (20) mit Konsolen (21) des Lagergehäuseunterteils (7) zusammenwirken.

**Revendications**

1. Palier combiné radial-axial pour ensembles de turbomachines, comportant un support de palier fixé rigidement à la fondation et des éléments mobiles de palier radial et axial, dans lequel les éléments de palier radial et axial sont logés dans un corps de palier (7 + 8) déplaçable dans le support de palier (3) suivant la direction longitudinale de l'arbe, et où les éléments de palier axial (28) sont disposés entre deux paliers radiaux avec éléments de palier radial (29), comportant également des organes de guidage pour assurer le guidage axial du corps de palier ainsi que des organes de glissement pour supporter le corps de palier (7 + 8) dans le support de palier (3) et qui autorisent un déplacement axial du corps de palier (7 + 8) par rapport au support de palier fixe (3), caractérisé en ce que les organes de glissement (18) se composent chacun d'une paire de disques superposés, mobiles l'un par rapport à l'autre, le disque inférieur étant logé dans un évidement prévu dans le support de palier (3) et le disque supérieur étant logé dans un évidement prévu dans la partie inférieure (7) du corps de palier, et en ce qu'il comprend des éléments de serrage (20) pour protéger le corps de palier (7 + 8) contre des mouvements de basculement autour de l'axe de l'arbre.

2. Palier combiné radial-axial suivant la revendication 1, caractérisé en ce que les surfaces des éléments de serrage (20) s'opposant au basculement coopèrent avec des consoles (21) solidaires de la partie inférieure (7) du corps de palier.

**Claims**

1. Combined multi-collar thrust bearing and journal bearing for turbo-generators, having a bearing block solidly connected to the foundation and displaceable thrust bearing and journal bearing elements, the thrust bearing and journal bearing elements being accommodated in a bearing housing (7 + 8) displaceable in the bearing block (3) in the longitudinal direction of the shaft, and the journal bearing elements (28) being located between two multi-collar thrust bearings with multi-collar thrust bearing elements (29), also having guide elements for the axial guidance of the bearing housing and the sliding elements for supporting the bearing housing (7 + 8) in the bearing block (3), which elements permit axial displacement of the bearing housing (7 + 8) relative to the fixed bearing block (3), characterised in that the sliding elements (18) each consist of a pair of mutually displaceable discs, one supported on the other, of which the lower is located in a recess in the bearing block (3) and the upper in a recess in the lower part of the bearing housing (7), and that it has holding down elements (20) for securing the bearing housing (7 + 8) against tipping movements around the shaft axis.

2. Combined multi-collar thrust bearing and journal bearing according to Claim 1, characterised in that the surfaces, which prevent tipping, of the holding down elements (20) interact with brackets (21) of the lower part of the bearing housing (7).

FIG. 1

FIG.2

FIG.3

# FIG. 4

FIG.5

## FIG.6